# EUROPEAN PATENT APPLICATION

(11) **EP 1 431 715 A1**
(43) Date of publication of application: **23.06.2004**
(21) Application number: 03078903.6
(22) Date of filing: 08.12.2003
(51) Int. Cl.: G01F 1/10

(54) **Flow meter with removable dirt collector**

(30) Priority: 18.12.2002 NL 1022196
(71) Applicant: INSTROMET B.V., 7064 KA Silvolde (NL)
(72) Inventor: Bergervoet, Josephus Theodorus Maria, 7061 XE Terborg (NL)
(74) Representative: De Hoop, Eric

(57) **Abstract**

Flow meter for measuring the flow speed of a fluid in a pipe, wherein the flow meter comprises a meter housing having a wall which with an inner surface thereof defines a flow passage, wherein the meter housing comprises a removable wall member that has an indicator surface that is part of the inner surface of the flow passage of the meter housing.
The indicator surface can be inspected for the presence of dirt, which is an indication of the dirt deposition in the entire flow meter.

## Description

The invention relates to a flow meter for measuring the flow speed of a fluid in a pipe, particularly for measuring the speed of a gas that flows through a pipe.

One measuring principle for flow meters is one using a turbine meter, in which from the gas speed a rotating motion of an impeller is derived, such that the number of revolutions of said impeller is practically proportional to the gas speed and thus to the quantity of gas flowing through per time unit. Integration thereof results in the total quantity of gas that flowed through in volume units at the prevailing measuring pressure and temperature.

For an accurate operation of said flow meters it is important that the rotation of the rotating measuring device driven by the flow is not hindered. A possible source of disruption for the accurate operation of a flow meter is the deposition of dirt on the inner wall of the meter housing, which in time may hinder the rotation of the rotating measuring device.

For other flow meters as well, such as for instance rotor meters and ultrasonic flow meters, the deposition of dirt on the inner wall of the meter housing may have detrimental effects on the accurate operation of the flow meters in question. In case of rotor meters a dirt deposition may hinder the rotation of the rotors. In case of an ultrasonic flow meter for instance a dirt deposition on or near the source of ultrasonic vibrations may adversely affect the measuring results.

It is therefore of importance, considering the accuracy of the flow meters, to establish the presence of dirt. Up until now this has been done with a kind of catheter that is inserted into the flow meter. The catheter is provided with a little lamp and a lens for visual inspection of the inner wall of the meter housing. This is a laborious method and does not give accurate information.

It is an object of the present invention to improve on this.

From one aspect the invention to that end provides a flow meter for measuring the flow speed of a fluid in a pipe, wherein the flow meter comprises a meter housing having a wall which with an inner surface thereof defines a flow passage, wherein the meter housing comprises a removable wall member that has an indicator surface that is part of the inner surface of the flow passage of the meter housing.

In case there is question of deposition of dirt on the inner surface of the flow passage, then dirt will also deposit on the indicator surface of the removable wall member. For an inspection to establish the possible presence of dirt only the removable wall member has to be taken out of the meter housing. When the removable wall member is taken out of the meter housing, the dirt deposition, if present, on the indicator surface, is also taken out and can easily be inspected outside of the meter housing.

An additional advantage is that the deposition of dirt is easily available for further, optionally multiple analysis for determining for instance the nature and the origin of the dirt.

In an embodiment the indicator surface of the removable wall member is placed parallel to the flow direction. Preferably the indicator surface has a normal that is oriented counter flow direction. The indicator surface is placed such that a fluid that flows through the flow passage, collides with the indicator surface. As a result dirt will more easily deposit on the indicator surface due to which a better indication can be obtained about the degree of pollution of the inner surface of the meter housing.

Preferably the indicator surface of the removable wall member comprises a first surface member that has a normal that is oriented counter flow direction, and a second surface member that is almost parallel to the flow direction, wherein the first surface member is situated at a downstream side of the second surface member. The indicator surface then forms a corner in which dirt from the fluid is able to deposit, which corner in its entirety is part of the removable wall member, and therefore can be removed in its entirety from the flow meter for inspection. As a result it is possible to take all the dirt present that has deposited in the corner, out of the meter housing together with the removable wall member.

In an embodiment the inner surface of the flow passage of the meter housing comprises an inwardly oriented step that contains the indicator surface of the removable wall member. The step to that end preferably comprises a recess for the removable wall member, and the indicator surface of the removable wall member fits at the inner side of the meter housing in the recess of the inwardly oriented step in the meter housing.

Preferably the indicator surface comprises a step portion that has the same shape as the step in the meter housing. The dirt deposition in the step portion then is comparable to the dirt deposition in the rest of the step and thus gives a good indication of the possible presence of the dirt.

In an embodiment of the flow meter according to the invention a rotating measuring device is placed in the flow passage, preferably a rotor or an impeller. The invention is of particular importance to these embodiments, because the presence of dirt may in time hinder the rotation of the rotating measuring device.

Preferably the removable wall member is placed near the circumference of the rotating measuring device. This location of the removable wall member makes it possible to inspect the most sensitive location in the flow meter for obtaining a direct indication of the possible hindrance of the rotation of the rotating measuring device by deposition of dirt.

In an embodiment the meter housing is provided with a step placed, when considered in the flow direction, at a downstream side of the circulating path of the rotating measuring device. It is advantageous here that the removable wall member according to the invention is placed at this step, because a possible deposition of dirt on this location may be an immediate danger to the blades of the impeller. Inspection of the removable wall member then results in a direct indication of the danger that the blades are in.

In an embodiment of the flow meter according to the invention, the removable wall member comprises a plug that is placed in the wall of the meter housing, wherein a first end of the plug oriented to an inner side of the meter housing comprises the indicator surface. The plug also serves as a fluid-proof sealing of the opening in the meter housing for the removable wall member.

Preferably the first end of the plug is placed eccentrically on the plug. As a result a univocal fitting of the plug in the wall of the meter housing is possible.

In an embodiment the meter housing comprises means for closing off the removable wall member from the pressure in the flow passage. In an embodiment the meter housing of the flow meter according to the invention therefore comprises a pressure relief facility which is placed in or near the removable wall member. As a result at least near the removable wall member the pressure of the fluid can be relieved prior to removing the removable wall member from the meter housing for inspection.

In an embodiment of the flow meter according to the invention, the indicator surface of the removable wall member is made of the same material as the inner surface of the flow passage of the meter housing. Preferably the indicator surface of the removable wall member has the same surface structure as the inner surface of the flow passage of the meter housing. As a result the degree of dirt deposition on the indicator surface is better and more directly comparable to the dirt deposition on the inner surface of the flow passage.

In an embodiment of the flow meters according to the invention the indicator surface of the removable wall member fittingly connects to the inner surface of the flow passage of the meter housing.

An embodiment of the flow meter is adapted for measuring a gaseous fluid.

The invention will be elucidated on the basis of an exemplary embodiment shown in the attached drawings, in which:
Figure 1 shows a cross-section of a turbine gas meter according to the invention; and
Figure 2 shows an enlarged partial view A of figure 1.

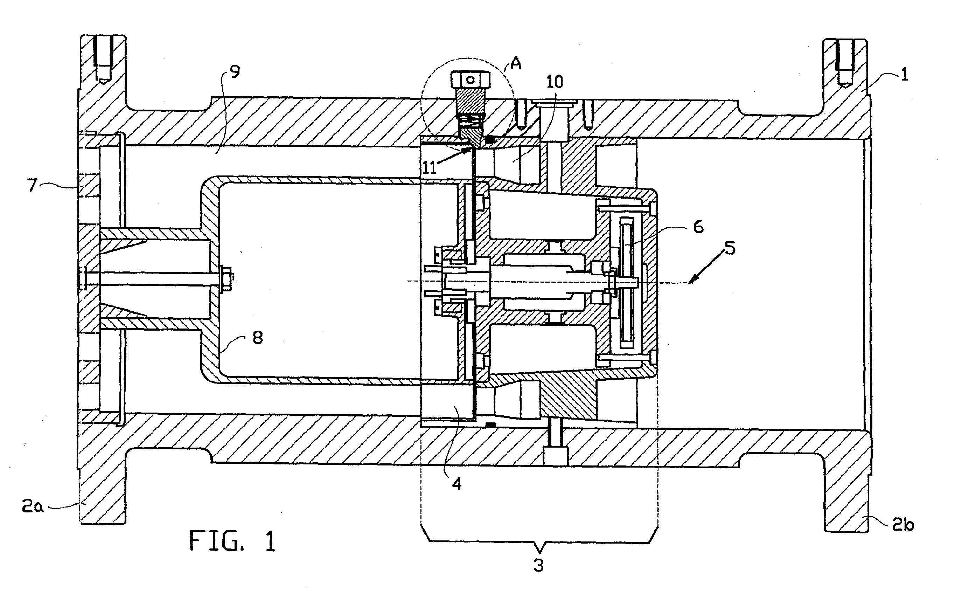

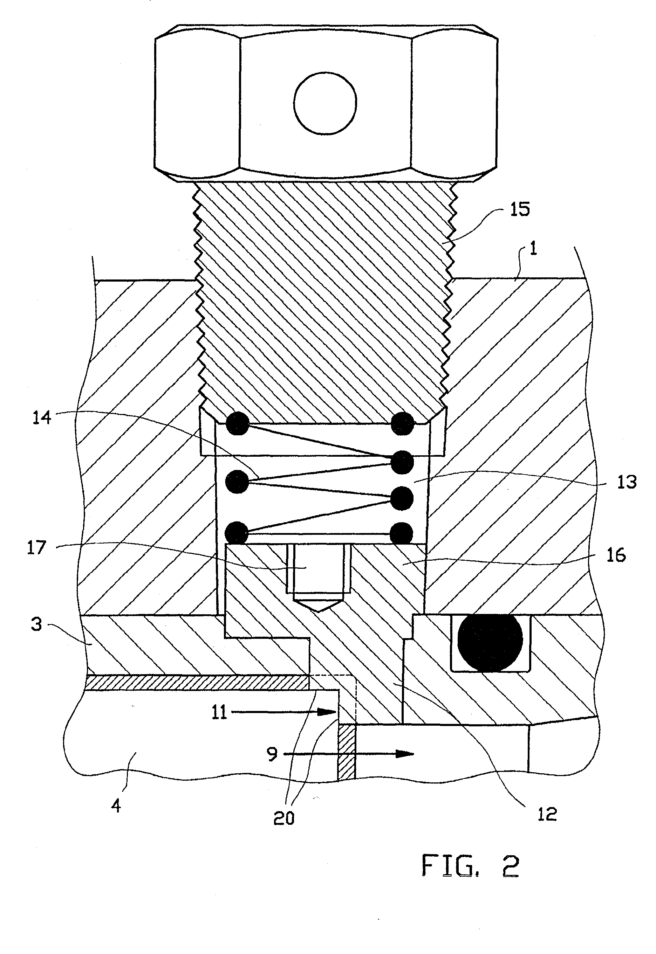

The turbine gas meter as shown in figure 1 comprises a meter housing 1 which at its ends 2a, 2b is provided with flanges for mounting the meter housing 1 in a gas pipe. In the meter housing a measuring insert 3 is placed. The measuring insert is provided with an aerodynamically designed impeller 4 that is rotatably placed in the measuring insert 3 about the shaft 5. Furthermore the measuring insert 3 is provided with a detector 6 that is coupled to the shaft 5 for giving pulses depending on the shaft revolution of the impeller 4. The pulse signal of the detector 6 is transferred out of the meter housing and is available there for further processing. The meter housing 1 is furthermore provided with a flow guide 7 which guides the gas on the impeller 4. The flow guide 7 is arranged at an upstream end 2a of the meter housing 1. Between the flow guide 7 and the measuring insert 3, a cylindrical body 8 is present to narrow the flow channel 9 in the meter housing 1 such that a considerable increase of speed of the gaseous medium in the flow channel 9 takes place. At the downstream side of the circulating path of the blades, there is a step 11, which is shown enlarged in figure 2. In step 11 dirt may deposit, which in time may hinder the rotation of the impeller 4. To inspect the deposition of dirt in the step 11, a removable wall member 12 is provided. The removable wall member 12, connects to the wall of the flow channel 9. In this example the indicator surface 20 of the removable wall member 12 forms a step portion itself that is similarly shaped to the step 11. The removable wall member 12 is placed in an opening 13 in the meter housing 1. The removable wall member 12 is kept in its place by a spring 14 which is situated between the removable wall member 12 and a screw bolt 15. By tightening the screw bolt 15 the spring pressure can be adjusted thus pressing the removable wall member 12 into its place. The removable wall member 12 here also functions as a plug for gas-proof sealing of the opening 13. The removable wall member 12 is eccentrically arranged on the plug 16 as shown in figure 2. As a result a univocal fitting is achieved of the wall member 12 in the recess for the wall member 12 in the step 11 as a result of which a correct placement of the wall member 12 is ensured.

For inspecting the removable wall member 12, the screw bolt 15 is removed and the spring 14. For engaging the plug 16, it is provided with a hole 17 comprising a thread. In this hole 17 an engagement bar (not shown) can be screwed in, which bar at its end has been provided with thread that fits the thread of hole 17. By means of the engagement bar the removable wall member 12 can easily be pulled out of the hole 13. The deposition of dirt in the step portion of the removable wall member 12 is representative of the dirt deposition in the entire step 11 in the flow channel 9.

It will be clear that the exemplary embodiment of the invention described above is intended as an illustration of the invention and not for limiting the invention. An expert will certainly be capable of designing alternative embodiments that fall within the scope of protection of the attached claims.

For instance the exemplary embodiment described above regards a turbine gas meter. The invention can also be advantageously applied in other types of flow meters, turbines and/or turbines for another fluid such as for instance a liquid.

## Claims

1. Flow meter for measuring the flow speed of a fluid in a pipe, wherein the flow meter comprises a meter housing having a wall which with an inner surface thereof defines a flow passage, wherein the meter housing comprises a removable wall member that has an indicator surface that is part of the inner surface of the flow passage of the meter housing.

2. Flow meter according to claim 1, wherein the indicator surface is placed parallel to the flow direction or has a normal that is oriented counter flow direction.

3. Flow meter according to claim 1, wherein the indicator surface comprises a first surface member that has a normal that is oriented counter flow direction, and a second surface member that is almost parallel to the flow direction, wherein the first surface member is situated at a downstream side of the second surface member.

4. Flow meter according to claim 1, 2 or 3, wherein the inner surface of the flow passage of the meter housing comprises an inwardly oriented step that contains the indicator surface of the removable wall member.

5. Flow meter according to any one of the preceding claims, wherein a rotating measuring device is placed in the flow passage, wherein the rotating measuring device preferably comprises a rotor or an impeller, and wherein the removable wall member is preferably placed near a circumference of the rotating measuring device.

6. Flow meter according to claim 5, when depending on claim 4, wherein the step, when considered in the flow direction, is placed at a downstream side of the circulating path of the rotating measuring device.

7. Flow meter according to any one of the preceding claims, wherein the removable wall member comprises a plug that is placed in the wall of the meter housing, wherein a first end of the plug oriented to an inner side of the meter housing comprises the indicator surface, wherein the first end of the plug is preferably placed eccentrically on the plug.

8. Flow meter according to any one of the preceding claims, wherein the meter housing comprises means for closing off the removable wall member from the pressure in the flow passage, and wherein the meter housing preferably comprises a pressure relief facility which is placed in or near the removable wall member.

9. Flow meter according to any one of the preceding claims, wherein the indicator surface of the removable wall member is made of the same material as the inner surface of the flow passage of the meter housing, and preferably has the same surface structure as the inner surface of the flow passage of the meter housing.

10. Flow meter according to any one of the preceding claims, wherein the indicator surface of the removable wall member fittingly connects to the inner surface of the flow passage of the meter housing.
